# EUROPÄISCHE PATENTANMELDUNG

(11) **EP 4 134 566 A1**
(43) Veröffentlichungstag der Anmeldung: **15.02.2023**
(21) Anmeldenummer: 22185933.3
(22) Anmeldetag: 20.07.2022
(51) Int. Cl.: F16F 1/38

(54) **ELASTOMERLAGER**

(30) Priorität: 11.08.2021 DE 102021120923
(71) Anmelder: BOGE Elastmetall GmbH, 49401 Damme (DE)
(72) Erfinder: BIEMANN, Thomas, 49597 Rieste (DE)
(74) Vertreter: Bossmeyer, Jörg Peter

(57) **Zusammenfassung**

Elastomerlager mit einem sich in einer axialen Richtung (x) erstreckenden Innenteil (2), einer das Innenteil (2) umringenden Außenhülse (3) aus Kunststoff, die in einem axialen Hülsenendbereich (4) mit wenigstens einem radial nach außen vorstehenden Anschlag (5, 6) versehen ist, einem zwischen dem Innenteil (2) und der Außenhülse (3) angeordneten Elastomerkörper (7) und einem oder mehreren fest mit der Außenhülse (3) verbundenen Federblechen (10), wobei jedes Federblech (10) im axialen Abstand zu dem axialen Hülsenendbereich (4) einen von der Außenhülse (4) nach radial außen vorstehenden Rastbereich (23) aufweist, der elastisch nach radial innen bewegbar ist.

## Beschreibung

Die Erfindung betrifft ein Elastomerlager mit einem sich in einer axialen Richtung erstreckenden Innenteil, einer das Innenteil umringenden Außenhülse aus Kunststoff, die in einem axialen Hülsenendbereich mit wenigstens einem radial nach außen vorstehenden Anschlag versehen ist, und einem zwischen dem Innenteil und der Außenhülse angeordneten Elastomerkörper.

Ein derartiges Elastomerlager wird beispielsweise als Hilfsrahmenlager bezeichnet und dient insbesondere zum Befestigten eines Hilfsrahmens an einem Chassis oder Aufbau eines Fahrzeugs. Üblicherweise wird das Elastomerlager dazu in eine Lageraufnahme eines Hilfsrahmens eingepresst.

Außenhülsen aus Kunststoff sind mittlerweile Standard, insbesondere da sie Vorteile hinsichtlich Kosten, Gewicht und Designfreiheit bieten. Nachteilig ist allerdings, dass sie im Vergleich zu metallischen Außenhülsen eine geringe Auspresskraft aufweisen. Als Auspresskraft wird insbesondere eine Kraft bezeichnet, die erforderlich ist, um das Elastomerlager aus der Lageraufnahmeausnehmung auszudrücken.

Ausgehend hiervon liegt der Erfindung insbesondere die Aufgabe zugrunde, bei einem Elastomerlager mit einer Außenhülse aus Kunststoff die Auspresskraft zu erhöhen.

Diese Aufgabe wird erfindungsgemäß mit einem Elastomerlager nach Anspruch 1 gelöst. Bevorzugte Weiterbildungen der Erfindung sind in den Unteransprüchen und in der nachfolgenden Beschreibung gegeben.

Ein Elastomerlager mit einem sich in einer axialen Richtung erstreckenden Innenteil, einer das Innenteil umringenden Außenhülse aus Kunststoff, die in einem axialen Hülsenendbereich mit wenigstens einem radial nach außen vorstehenden Anschlag versehen ist, und einem zwischen dem Innenteil und der Außenhülse angeordneten Elastomerkörper ist erfindungsgemäß insbesondere dadurch weitergebildet, dass ein oder mehrere fest, vorzugsweise formschlüssig, mit der Außenhülse verbundene Federbleche vorgesehen sind, wobei jedes Federblech im axialen Abstand zu dem axialen Hülsenendbereich einen von der Außenhülse nach radial außen vorstehenden Rastbereich aufweist, der elastisch nach radial innen bewegbar ist.

Da jedes Federblech einen von der Außenhülse nach radial außen vorstehenden Rastbereich aufweist, kann es mit diesem Rastbereich z.B. in eine in einer Lageraufnahme vorgesehene Aussparung einschnappen, was zu einem Formschluss zwischen der Außenhülse und der Lageraufnahme und somit zu einer Erhöhung der Auspresskraft führt. Ferner kann der Rastbereich jedes Federblechs beim Einpressen des Elastomerlagers in die Lageraufnahme elastisch nach radial innen bewegt werden, sodass der Einpressvorgang durch den Rastbereich nicht behindert wird. Insbesondere ist der Rastbereich jedes Federblechs beim Einpressen des Elastomerlagers in die Lageraufnahme durch elastische Verformung und/oder unter elastischer Verformung des jeweiligen Federblechs elastisch nach radial innen bewegbar.

Dem Elastomerlager und/oder dem Innenteil und/oder der Außenhülse ist bevorzugt eine in axialer Richtung verlaufende Mittellängsachse zugeordnet. Vorzugsweise verläuft die oder eine in axialer Richtung verlaufende Mittellängsachse mittig durch das Elastomerlager und/oder durch das Innenteil und/oder durch die Außenhülse. Eine oder jedwede quer zur axialen Richtung und/oder quer zur Mittellängsachse verlaufende Richtung wird insbesondere als radiale Richtung bezeichnet. Der Ausdruck "radial nach außen" bedeutet beispielsweise von der Mittellängsachse radial wegweisend. Der Ausdruck "radial nach innen" bedeutet beispielsweise zu der Mittellängsachse radial hinweisend. Bevorzugt wird eine um die Mittellängsachse und/oder um das Innenteil und/oder um den Elastomerkörper und/oder um die Außenhülse herum verlaufende Richtung als Umfangsrichtung bezeichnet. Der Ausdruck "wenigstens ein" umfasst vorzugsweise auch die Bedeutung von "ein" oder "genau ein".

Bevorzugt verläuft jedes Federblech in oder im Wesentlichen in axialer Richtung. Beispielsweise verläuft jedes Federblech, insbesondere bis auf den Rastbereich, vorzugsweise in axialer Richtung, gerade oder im Wesentlichen gerade. Gemäß einer Ausbildungsform verläuft jedes Federblech, insbesondere im Rastbereich und/oder unter Ausbildung des Rastbereichs, vorzugsweise in axialer Richtung oder in Umfangsrichtung, zumindest bereichsweise gegenüber der axialen Richtung und/oder gegenüber der Außenumfangsfläche der Außenhülse, vorzugsweise nach radial außen, geneigt.

Gemäß einer Ausgestaltung ist jedes Federblech als Federzunge ausgebildet. In diesem Fall kann jedes Federblech insbesondere auch als Federzunge bezeichnet werden. Bevorzugt weist jede Federzunge ein freies Federzungenende und eine Federzungenwurzel auf, die insbesondere fest, vorzugsweise formschlüssig, mit der Außenhülse verbunden ist. Vorzugsweise ist bei jeder Federzunge das freie Federzungenende gegenüber der Federzungenwurzel in axialer Richtung versetzt und/oder beabstandet angeordnet. Vorteilhaft ist jede Federzunge mit ihrem freien Federzungenende dem axialen Hülsenendbereich zugewandt oder abgewandt und/oder mit ihrer Federzungenwurzel dem axialen Hülsenendbereich abgewandt oder zugewandt. Vorzugsweise verläuft jede Federzunge in oder im Wesentlichen in axialer Richtung.

Bevorzugt steht jede Federzunge mit ihrem freien Federzungenende nach radial außen von der Außenhülse vor und/oder jede Federzunge ist mit ihrem freien Federzungenende z.B. gegenüber der Außenhülse nach radial außen versetzt. Insbesondere ist der Rastbereich jeder Federzunge im Bereich des freien Federzungenendes der jeweiligen Federzunge vorgesehen. Vorteilhaft bildet oder umfasst das freie Federzungenende jeder Federzunge den Rastbereich der jeweiligen Federzunge. Beispielsweise verläuft jede Federzunge an ihrem freien Federzungenende in radialer Richtung.

Bevorzugt steht die Federzungenwurzel jeder Federzunge nicht oder weniger radial nach außen von der Außenhülse vor als das freie Federzungenende der jeweiligen Federzunge. Beispielsweise weist das freie Federzungenende jeder Federzunge einen, insbesondere lichten, radialen Abstand zu der Außenhülse und/oder zu der Außenumfangsfläche der Außenhülse auf.

Gemäß einer Weiterbildung verläuft jede Federzunge, insbesondere bis auf ihr freies Federzungenende, vorzugsweise in axialer Richtung, insbesondere gerade oder im Wesentlichen gerade. Gemäß einer Ausbildungsform verläuft jede Federzunge, insbesondere im Rastbereich und/oder unter Ausbildung des Rastbereichs, vorzugsweise in axialer Richtung oder in Umfangsrichtung, zumindest bereichsweise gegenüber der axialen Richtung und/oder gegenüber der Außenumfangsfläche der Außenhülse, vorzugsweise nach radial außen, geneigt. Beispielsweise ragt das freie Federzungenende jeder Federzunge gegenüber der Außenhülse radial nach außen ab.

Gemäß einer Ausgestaltung ist das freie Federzungenende jeder Federzunge gegenüber der Federzungenwurzel der jeweiligen Federzunge radial nach außen versetzt. Vorteilhaft verläuft jede Federzunge in axialer Richtung, insbesondere zumindest bereichsweise, gegenüber der axialen Richtung und/oder der Mittellängsachse, vorzugsweise nach radial außen, geneigt. Bevorzugt ist die Neigung dabei derart, dass jede Federzunge in, vorzugsweise axialer, Richtung auf den axialen Hülsenendbereich zu, insbesondere zumindest bereichsweise, von der Mittellängsachse und/oder von der Außenhülse und/oder von der Außenumfangsfläche der Außenhülse, vorzugsweise radial nach außen, weg geneigt ist.

Gemäß einer ersten beispielhaften Variante verläuft jede Federzunge an ihrem freien Federzungenende oder im Bereich ihres freien Federzungenendes in radialer Richtung, insbesondere gerade. Gemäß einer zweiten beispielhaften Variante verläuft jede Federzunge an ihrem freien Federzungenende oder im Bereich ihres freien Federzungenendes in axialer Richtung, insbesondere gerade. Vorteilhaft verläuft jede Federzunge an ihrer Federzungenwurzel oder im Bereich ihrer Federzungenwurzel in axialer Richtung, insbesondere gerade.

Bevorzugt weist jede Federzunge zwischen ihrer Federzungenwurzel und ihrem freien Federzungenende einen mittleren Federzungenbereich auf. Gemäß einer ersten beispielhaften Alternative verläuft jede Federzunge in ihrem mittleren Federzungenbereich in axialer Richtung, insbesondere gerade. Gemäß einer zweiten beispielhaften Alternative verläuft jede Federzunge in ihrem mittleren Federzungenbereich in axialer Richtung gegenüber der axialen Richtung und/oder der Mittellängsachse, vorzugsweise nach radial außen, geneigt. Bevorzugt ist die Neigung dabei derart, dass der mittlere Federzungenbereich jeder Federzunge in, vorzugsweise axialer, Richtung auf den axialen Hülsenendbereich zu, insbesondere zumindest bereichsweise, von der Mittellängsachse und/oder von der Außenhülse und/oder von der Außenumfangsfläche der Außenhülse, vorzugsweise radial nach außen, weg geneigt ist.

Bevorzugt weist jedes Federblech, insbesondere näherungsweise und/oder im Wesentlichen, eine quadratische oder rechteckige Kontur oder Umfangskontur auf. Vorzugsweise besteht jedes Federblech aus Metall, vorzugsweise aus Stahl, insbesondere aus Federstahl. Vorteilhaft bilden die Federbleche eine, insbesondere das Innenteil und/oder die Mittellängsachse und/oder den Elastomerkörper umringende, Federblechanordnung. Bevorzugt sind die Federbleche rings des Innenteils und/oder der Mittellängsachse und/oder des Elastomerkörpers, vorzugsweise gleichmäßig verteilt, angeordnet. Die Federblechanordnung kann z.B. auch als Federzungenanordnung bezeichnet werden, insbesondere wenn jedes Federblech als Federzunge ausgebildet ist.

Gemäß einer Weiterbildung ist jedes Federblech oder jede Federzunge, insbesondere im Bereich ihrer Federzungenwurzel, vorzugsweise fest und/oder stoffschlüssig und/oder materialhomogen, mit einem das Innenteil und/oder den Elastomerkörper umringenden Band verbunden. Insbesondere bildet jedes Federblech einen integralen Bestandteil des Bands. Bevorzugt ist das Band fest, vorzugsweise formschlüssig, mit der Außenhülse verbunden. Insbesondere ist, vorzugsweise somit, jedes Federblech und/oder die Federzungenwurzel jeder Federzunge mittels des Bands fest mit der Außenhülse verbunden. Vorzugsweise ist das Band in die Außenhülse integriert und/oder eingebettet. Vorteilhaft umfasst die Federblechanordnung das Band. Vorzugsweise bilden das Band und das Federblech oder die Federbleche eine bauliche Einheit.

Bevorzugt steht das Band nicht oder weniger radial nach außen von der Außenhülse vor als der Rastvorsprung jedes Federblechs und/oder als das freie Federzungenende jeder Federzunge. Vorzugsweise besteht das Band aus Metall, insbesondere aus Stahl, beispielsweise aus Federstahl. Insbesondere besteht das Band aus demselben Material wie das Federblech oder die Federbleche.

Vorteilhaft weist das Band im Bereich jedes Federblechs eine fensterartige Öffnung auf. Beispielsweise ist jedes Federblech aus dem Band ausgestanzt.

Bevorzugt ist oder sind das Band und/oder jedes Federblech oder jede Federzunge, vorzugsweise im Bereich ihrer Federzungenwurzel, insbesondere zumindest teilweise oder bereichsweise, in den Kunststoff der Außenhülse integriert und/oder eingebettet und/oder, insbesondere zumindest teilweise oder bereichsweise, mit oder von dem Kunststoff der Außenhülse umspritzt oder umschlossen. Vorteilhaft ist oder sind die Federblechanordnung und/oder das Band und/oder jedes Federblech oder jede Federzunge, vorzugsweise im Bereich ihrer Federzungenwurzel, formschlüssig und/oder kraftschlüssig und/oder stoffschlüssig mit der Außenhülse verbunden und/oder an der Außenhülse festgelegt.

Das Band erleichtert insbesondere die Montage der Federzungen, sodass sie nicht einzeln positioniert und fixiert werden müssen. Bevorzugt ist lediglich eine Positionierung und Fixierung der aus dem Band und der Federzunge oder den Federzungen gebildeten baulichen Einheit erforderlich.

Gemäß einer Ausgestaltung ist die Außenhülse zylindrisch oder im Wesentlichen zylindrisch ausgebildet. Insbesondere ist die Außenhülse kreiszylindrisch oder im Wesentlichen kreiszylindrisch ausgebildet. Bevorzugt erstreckt sich die Außenhülse in axialer Richtung. Vorzugsweise umringt die Außenhülse die oder eine in axialer Richtung verlaufende Mittellängsachse. Beispielsweise ist die Außenhülse bezüglich der oder einer in axialer Richtung verlaufenden Mittellängsachse rotationssymmetrisch.

Gemäß einer Weiterbildung ist in der Außenhülse im Bereich jedes Federblechs eine, insbesondere fensterartige, vorzugsweise durchgehende, Federblechöffnung vorgesehen, in der bevorzugt das jeweilige Federblech, insbesondere zumindest bereichsweise, sitzt oder angeordnet ist. Somit ist es z.B. möglich, dass der Elastomerkörper das elastische Verhalten jedes Federblechs unterstützt. Beispielsweise liegt der Elastomerkörper an jedem Federblech, vorzugsweise im Bereich oder innerhalb der jeweiligen Federblechöffnung, insbesondere innenseitig, an. Jede Federblechöffnung kann z.B. auch als Federzungenöffnung bezeichnet werden, insbesondere wenn jedes Federblech als Federzunge ausgebildet ist.

Die Außenhülse besteht bevorzugt aus einem thermoplastischen Kunststoff, der insbesondere mit Fasern verstärkt ist. Beispielsweise besteht die Außenhülse aus Polyamid, insbesondere aus faserverstärktem Polyamid. Bei den Fasern handelt es sich z.B. um Glasfasern. Beispielsweise besteht die Außenhülse aus glasfaserverstärktem Polyamid, wie z.B. aus PA6 GF30 oder PA6 GF40.

Der axiale Hülsenendbereich der Außenhülse, an dem der wenigstens eine Anschlag vorgesehen ist, wird vorzugsweise als erster axialer Hülsenendbereich der Außenhülse bezeichnet. Bevorzugt weist die Außenhülse zwei axiale Hülsenendbereiche auf, von denen einer insbesondere den einen oder ersten axialen Hülsenendbereich bildet. Ein anderer axialer Hülsenendbereich der Außenhülse und/oder ein anderer der axialen Hülsenendbereiche der Außenhülse wird vorzugsweise als zweiter axialer Hülsenendbereich der Außenhülse bezeichnet. Der wenigstens eine Anschlag dient insbesondere als Wegbegrenzung beim Einbringen des Elastomerlagers in eine Lageraufnahme. Bevorzugt dient der wenigstens eine Anschlag auch zur formschlüssigen axialen Festlegung des Elastomerlagers an der oder einer Lageraufnahme, vorzugsweise in Kombination mit der oder den Federblechen.

Der wenigstens eine Anschlag steht insbesondere radial nach außen von der Außenhülse und/oder von der Außenumfangsfläche der Außenhülse vor. Beispielsweise ist der wenigstens eine Anschlag ringförmig oder teilringförmig ausgebildet.

Bevorzugt ist die Außenhülse in dem einen axialen Hülsenendbereich mit mehreren radial nach außen vorstehenden Anschlägen versehen. Vorzugsweise sind die Anschläge in Umfangsrichtung zueinander beabstandet. Beispielsweise sind die Anschläge, insbesondere jeweils, teilringförmig. Vorteilhaft stehen die Anschläge, insbesondere jeweils, radial nach außen von der Außenhülse und/oder von der Außenumfangsfläche der Außenhülse vor. Insbesondere sind die Anschläge rings der Mittellängsachse gleichmäßig verteilt angeordnet. In die Abstände zwischen den Anschlägen kann beispielsweise ein Abziehwerkzeug eingreifen, um das Elastomerlager aus der oder einer Lageraufnahme zu entfernen.

Bevorzugt besteht der wenigstens eine Anschlag und/oder bestehen die Anschläge aus einem thermoplastischen Kunststoff, der insbesondere mit Fasern verstärkt ist. Beispielsweise besteht der wenigstens eine Anschlag und/oder bestehen die Anschläge aus Polyamid, insbesondere aus faserverstärktem Polyamid. Bei den Fasern handelt es sich z.B. um Glasfasern. Beispielsweise besteht der wenigstens eine Anschlag und/oder bestehen die Anschläge aus glasfaserverstärktem Polyamid, wie z.B. aus PA6 GF30 oder PA6 GF40.

Vorteilhaft bildet der wenigstens eine oder jeder Anschlag einen integralen Bestandteil der Außenhülse. Der wenigstens eine Anschlag oder die Anschläge bilden insbesondere eine die Mittellängsachse und/oder das Innenteil umringende Anschlagsanordnung.

Das Innenteil besteht bevorzugt aus Metall. Insbesondere besteht das Innenteil aus Aluminium. Ferner kann das Innenteil z.B. mit Kunststoff beschichtet und/oder umspritzt sein. Vorzugsweise ist das Innenteil mit einem, insbesondere axialen, Durchgangsloch versehen. Vorteilhaft erstreckt sich das Durchgangsloch mittig durch das Innenteil hindurch. Das Durchgangsloch dient insbesondere zur Aufnahme eines Befestigungsmittels, wie z.B. ein Befestigungsbolzen.

Der Elastomerkörper besteht bevorzugt aus einem Elastomer, wie z.B. Gummi. Vorzugsweise ist der Elastomerkörper festhaftend und/oder stoffschlüssig mit der Außenhülse verbunden. Beispielsweise ist der Elastomerkörper an die Außenhülse anvulkanisiert. Vorteilhaft ist der Elastomerkörper festhaftend und/oder stoffschlüssig mit dem Innenteil verbunden. Beispielsweise ist der Elastomerkörper an das Innenteil anvulkanisiert. Das Elastomerlager kann z.B. auch als Gummilager bezeichnet werden.

Das Elastomerlager ist bevorzugt für ein Fahrzeug vorgesehen, welches insbesondere ein Kraftfahrzeug ist. Vorzugsweise handelt es sich bei dem Elastomerlager um ein Hilfsrahmenlager oder Fahrschemellager.

Die Erfindung betrifft insbesondere ferner eine Verbindungsanordnung mit einem Bauteil, welches wenigstens eine mit einer zumindest einseitig offenen Lageraufnahmeausnehmung versehene Lageraufnahme aufweist, und wenigstens einem Elastomerlager, welches in die Lageraufnahmeausnehmung eingebracht ist. Bei dem Elastomerlager handelt es sich insbesondere um ein erfindungsgemäßes Elastomerlager. Bevorzugt weist die Lageraufnahme eine die Lageraufnahmeausnehmung begrenzende Lageraufnahmewandung auf, in der eine oder mehrere, vorzugsweise durchgehende, Aussparungen vorgesehen sind, in welche das Federblech mit seinem Rastbereich oder die Federbleche mit ihren Rastbereichen, insbesondere radial, eingreift oder eingreifen. Vorzugsweise ist das Federblech mit seinem Rastbereich oder sind die Federbleche mit ihren Rastbereichen in die eine oder mehreren Aussparungen eingeschnappt. Das Elastomerlager ist insbesondere in die Lageraufnahmeausnehmung eingepresst. Vorteilhaft ist je Federblech eine oder genau eine Aussparung vorgesehen. Jede Aussparung ist bevorzugt in Form einer fensterartigen Öffnung ausgebildet. Insbesondere ist oder sind die Lageraufnahme und/oder die Lageraufnahmeausnehmung und/oder die Lageraufnahmewandung, vorzugsweise jeweils, zylindrisch ausgebildet. Vorteilhaft bilden die Aussparungen eine das Elastomerlager umringende Aussparungsanordnung. Bevorzugt sind die Aussparungen rings des Elastomerlagers, vorzugsweise gleichmäßig verteilt, angeordnet.

Das Bauteil ist vorzugsweise ein Fahrzeugbauteil. Beispielsweise ist das Bauteil ein Fahrschemel oder Hilfsrahmen.

Bevorzugt ist die Außenhülse mit dem wenigstens einen Anschlag und/oder mit den Anschlägen an einer, insbesondere axialen, Stirnseite oder Schulter der Lageraufnahme oder Lageraufnahmewandung, insbesondere axial, abgestützt. Beispielsweise liegt der wenigstens eine Anschlag und/oder liegen die Anschläge an der oder einer, insbesondere axialen, Stirnseite oder Schulter der Lageraufnahme oder Lageraufnahmewandung, vorzugsweise axial, an.

Die Erfindung wird nachfolgend anhand bevorzugter Ausführungsformen unter Bezugnahme auf die Zeichnung beschrieben. In der Zeichnung zeigen:
Fig. 1 eine perspektivische Ansicht eines Elastomerlagers gemäß einer ersten Ausführungsform,
Fig. 2 eine Seitenansicht des Elastomerlagers gemäß der ersten Ausführungsform,
Fig. 3 eine Draufsicht auf das Elastomerlager gemäß der ersten Ausführungsform,
Fig. 4 eine Schnittansicht des Elastomerlagers gemäß der ersten Ausführungsform entlang der aus Fig. 3 ersichtlichen Schnittlinie A-A,
Fig. 5 die Ansicht nach Fig. 4 in einem in eine Lageraufnahmeausnehmung einer Lageraufnahme eingebrachten Zustand des Elastomerlagers gemäß der ersten Ausführungsform und
Fig. 6 eine Schnittansicht einer Außenhülse eines Elastomerlagers gemäß einer zweiten Ausführungsform.

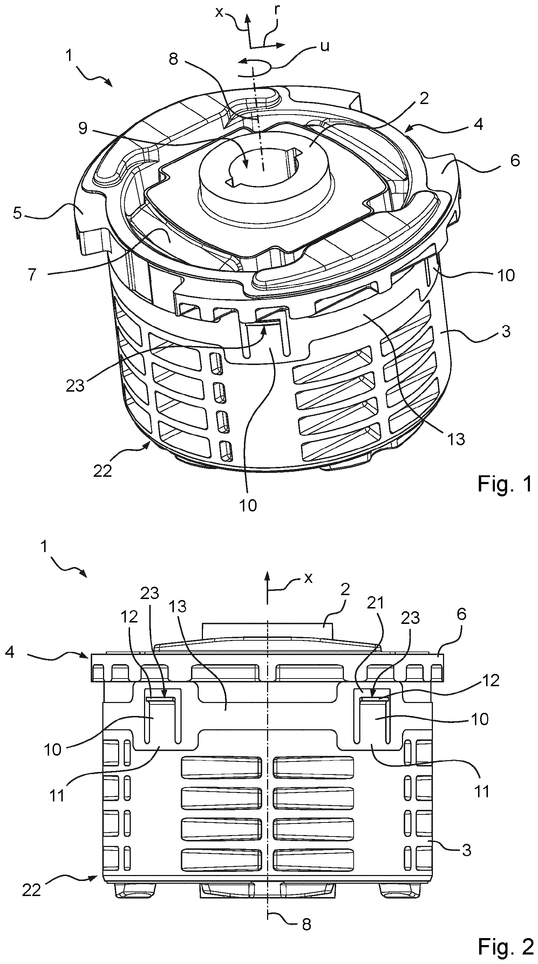

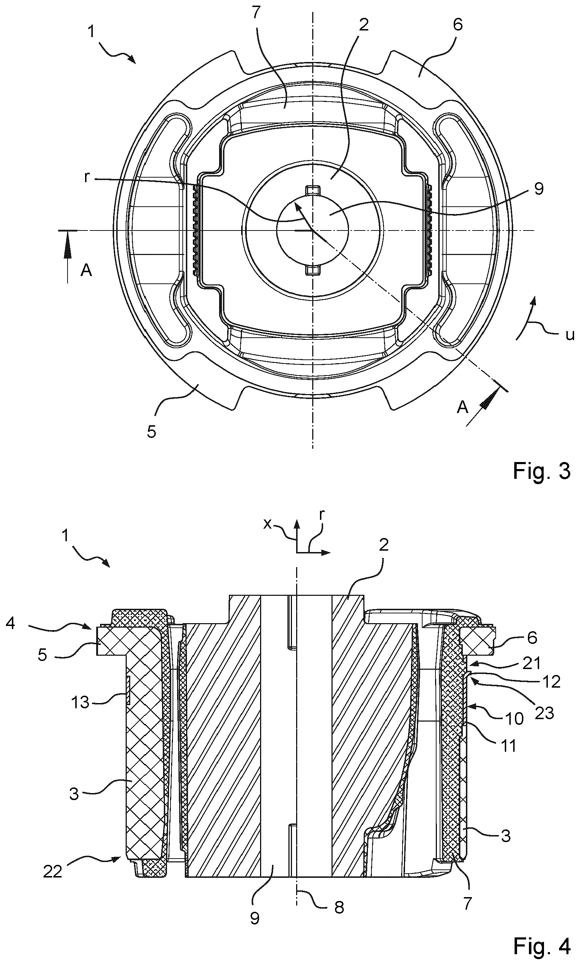

Aus den Fig. 1 bis 4 sind unterschiedliche Ansichten eines Elastomerlagers 1 gemäß einer ersten Ausführungsform ersichtlich, welches ein sich in einer axialen Richtung x erstreckendes Innenteil 2, eine das Innenteil 2 umringende Außenhülse 3 aus Kunststoff, die in einem axialen Hülsenendbereich 4 mit mehreren radial nach außen vorstehenden Anschlägen 5 und 6 versehen ist, und einen zwischen dem Innenteil 2 und der Außenhülse 3 angeordneten Elastomerkörper 7 aufweist, der sowohl mit dem Innenteil 2 als auch mit der Außenhülse 3 stoffschlüssig verbunden ist. Insbesondere ist der Elastomerkörper 7 sowohl an das Innenteil 2 als auch an die Außenhülse 3 anvulkanisiert.

Dem Elastomerlager 1 ist eine in axialer Richtung x verlaufende Mittellängsachse 8 zugeordnet, wobei eine oder jedwede quer zur Mittellängsachse 8 verlaufende Richtung insbesondere als radiale Richtung r bezeichnet wird. Ferner ist dem Elastomerlager 1 eine um die Mittellängsachse 8 herum verlaufende Umfangsrichtung u zugeordnet. Der axiale Hülsenendbereich 4 der Außenhülse 3 wird z.B. auch als erster axialer Hülsenendbereich bezeichnet. Ein zweiter axialer Hülsenendbereich der Außenhülse 3 ist mit dem Bezugszeichen 22 gekennzeichnet.

Gemäß der ersten Ausführungsform beträgt die Anzahl der Anschläge zwei. Es sind aber auch mehr als zwei Anschläge oder lediglich ein einziger Anschlag möglich. Ferner sind die Anschläge 5 und 6 in Umfangsrichtung u im Abstand zueinander angeordnet.

Durch das Innenteil 2 erstreckt sich in axialer Richtung x ein Durchgangsloch 9 hindurch, in welches insbesondere ein Befestigungsmittel, wie z.B. ein Befestigungsbolzen, eingebracht werden kann.

Das Elastomerlager 1 weist ferner mehrere Federbleche 10 auf, wobei jedes Federblech 10 im axialen Abstand zu dem axialen Hülsenendbereich 4 einen von der Außenhülse 3 nach radial außen vorstehenden Rastbereich 23 aufweist. Jedes Federblech 10 ist als nach radial innen elastisch biegbare Federzunge ausgebildet und weist eine Federzungenwurzel 11 und ein gegenüber dieser axial beabstandetes und dem axialen Hülsenendbereich 4 zugewandtes freies Federzungenende 12 auf. Gemäß der ersten Ausführungsform steht das freie Federzungenende 12 jeder Federzunge 10 radial nach außen von der Außenhülse 3 vor und bildet den jeweiligen Rastbereich 23. Da jede Federzunge 10 nach radial innen elastisch biegbar ist, ist jedes freie Federzungenende 12 und somit jeder Rastbereich 23 elastisch nach radial innen bewegbar. Jede Federzunge 10 ist im Bereich ihrer Federzungenwurzel 11 fest mit einem den Elastomerkörper 7 umringenden und fest mit der Außenhülse 3 verbundenen Band 13 aus Metall verbunden und bildet insbesondere einen integralen Bestandteil des Bands 13. In der Außenhülse 3 ist im Bereich jeder Federzunge 10 eine fensterartige Federblechöffnung 21 vorgesehen, in der die jeweilige Federzunge 10 angeordnet ist. Ferner liegt der Elastomerkörper 7 an jeder Federzunge 10 im Bereich der jeweiligen Federzungenöffnung 21 an.

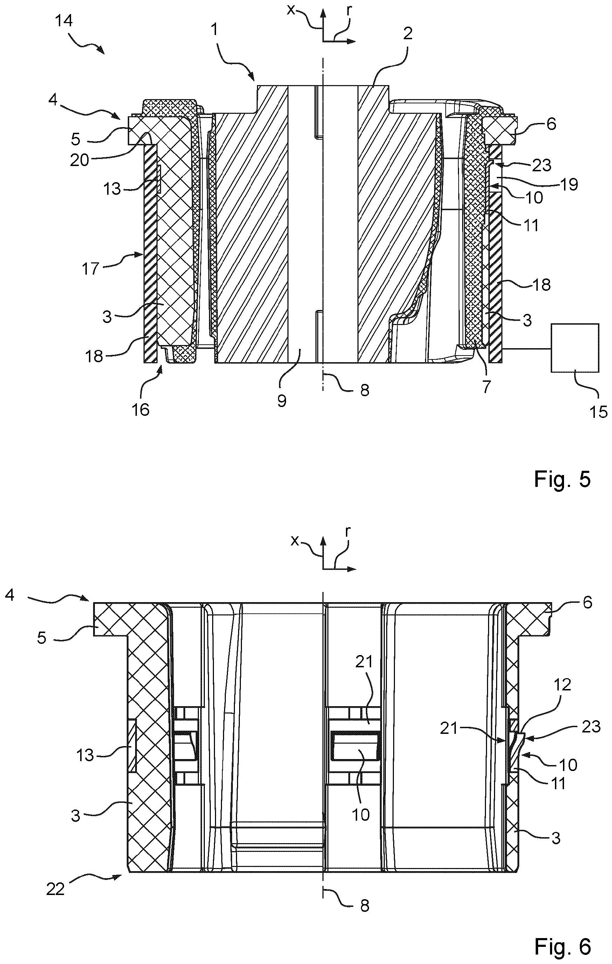

Fig. 5 zeigt eine Verbindungsanordnung 14 mit einem zuvor beschriebenen Elastomerlager 1 gemäß der ersten Ausführungsform und einem lediglich schematisch angedeuteten Bauteil 15, welches eine mit einer beidseitig offenen Lageraufnahmeausnehmung 16 versehene Lageraufnahme 17 aufweist, wobei das Elastomerlager 1 in die Lageraufnahmeausnehmung 16 eingepresst ist, die vorzugsweise zylindrisch ausgebildet ist. Die Lageraufnahme 17 weist eine die Lageraufnahmeausnehmung 16 begrenzende Lageraufnahmewandung 18 auf, in der mehrere durchgehende Aussparungen 19 vorgesehen sind, in welche die Federzungen 10 mit ihren Rastbereichen 23 radial eingreifen. Ferner ist die Außenhülse 3 mit ihren Anschlägen 5 und 6 an einer axialen Stirnseite 20 der Lageraufnahmewandung 18 axial abgestützt. Bevorzugt ist die Lageraufnahmewandung 18 an ihrem dem axialen Endbereich 4 des Elastomerlagers 1 zugewandten Ende innenseitig mit einer Fase versehen, welche ein elastisches Biegen der Federzungen 10 nach radial innen während des Einpressens des Elastomerlagers 1 in die Lageraufnahmeausnehmung 16 erleichtert.

Fig. 6 zeigt eine Schnittansicht einer Außenhülse 3 eines Elastomerlagers gemäß einer zweiten Ausführungsform, wobei zu der ersten Ausführungsform identische oder ähnliche Merkmale mit denselben Bezugszeichen wie bei der ersten Ausführungsform bezeichnet sind. Auch hier ist jedes einen Rastbereich 23 aufweisende Federblech 10 als Federzunge ausgebildet. Im Unterschied zur ersten Ausführungsform verläuft jede Federzunge 10 in einem zwischen ihrer Federzungenwurzel 11 und ihrem freien Federzungenende 12 angeordneten Bereich, der z.B. auch als mittlerer Federzungenbereich bezeichnet wird, in axialer Richtung x gegenüber der Mittellängsachse 8 geneigt. Das freie Federzungenende 12 jeder Federzunge 10 ist somit gegenüber der Außenhülse 3 radial nach außen versetzt. Bevorzugt bildet ein das freie Federzungenende 12 jeder Federzunge 10 umfassender freier Federzungenendbereich den Rastbereich 23 der jeweiligen Federzunge 10. Ferner verläuft jede Federzunge 10 im Bereich ihres freien Federzungenendes 12 in axialer Richtung x vorzugsweise gerade. Abgesehen von diesen Unterschieden stimmt die zweite Ausführungsform mit der ersten Ausführungsform, insbesondere im Wesentlichen, überein, sodass zur weiteren Beschreibung der zweiten Ausführungsform auf die Beschreibung der ersten Ausführungsform verwiesen wird. Beispielsweise kann die Außenhülse gemäß der ersten Ausführungsform durch die Außenhülse gemäß der zweiten Ausführungsform ersetzt werden.

### Bezugszeichenliste

- 1: Elastomerlager
- 2: Innenteil
- 3: Außenhülse
- 4: (erster) axialer Hülsenendbereich
- 5: Anschlag
- 6: Anschlag
- 7: Elastomerkörper
- 8: Mittellängsachse
- 9: Durchgangsloch
- 10: Federblech / Federzunge
- 11: Federzungenwurzel
- 12: freies Federzungenende
- 13: Band
- 14: Verbindungsanordnung
- 15: Bauteil
- 16: Lageraufnahmeausnehmung
- 17: Lageraufnahme
- 18: Lageraufnahmewandung
- 19: Aussparung in Lageraufnahmewandung
- 20: Stirnseite der Lageraufnahmewandung
- 21: Federzungenöffnung
- 22: (zweiter) axialer Hülsenendbereich
- 23: Rastbereich

- u: Umfangsrichtung
- r: radiale Richtung
- x: axiale Richtung

## Patentansprüche

1. Elastomerlager mit einem sich in einer axialen Richtung (x) erstreckenden Innenteil (2), einer das Innenteil (2) umringenden Außenhülse (3) aus Kunststoff, die in einem axialen Hülsenendbereich (4) mit wenigstens einem radial nach außen vorstehenden Anschlag (5, 6) versehen ist, und einem zwischen dem Innenteil (2) und der Außenhülse (3) angeordneten Elastomerkörper (7), **gekennzeichnet durch** ein oder mehrere fest mit der Außenhülse (3) verbundene Federbleche (10), wobei jedes Federblech (10) im axialen Abstand zu dem axialen Hülsenendbereich (4) einen von der Außenhülse (3) nach radial außen vorstehenden Rastbereich (23) aufweist, der elastisch nach radial innen bewegbar ist.

2. Elastomerlager nach Anspruch 1, **dadurch gekennzeichnet, dass** jedes Federblech (10) als Federzunge ausgebildet ist und ein freies Federzungenende (12) und eine fest mit der Außenhülse (3) verbundene Federzungenwurzel (11) aufweist.

3. Elastomerlager nach Anspruch 2, **dadurch gekennzeichnet, dass** jede Federzunge (10) mit ihrem freien Federzungenende (12) radial nach außen von der Außenhülse (3) vorsteht oder gegenüber der Außenhülse (3) radial nach außen versetzt ist.

4. Elastomerlager nach Anspruch 2 oder 3, **dadurch gekennzeichnet, dass** der Rastbereich (23) jeder Federzunge (10) im Bereich des freien Federzungenendes (12) der jeweiligen Federzunge (10) vorgesehen ist.

5. Elastomerlager nach einem der Ansprüche 2 bis 4, **dadurch gekennzeichnet, dass** jede Federzunge (10) in axialer Richtung (x) zumindest bereichsweise gegenüber der axialen Richtung (x) geneigt verläuft.

6. Elastomerlager nach einem der vorangehenden Ansprüche, **dadurch gekennzeichnet, dass** in der Außenhülse (3) im Bereich jedes Federblechs (10) eine fensterartige Federblechöffnung (21) vorgesehen ist, in der das jeweilige Federblech (10) zumindest bereichsweise angeordnet ist.

7. Elastomerlager nach Anspruch 6, **dadurch gekennzeichnet, dass** der Elastomerkörper (7) an jedem Federblech (10) im Bereich der jeweiligen Federblechöffnung (21) anliegt.

8. Elastomerlager nach einem der vorangehenden Ansprüche, **dadurch gekennzeichnet, dass** jedes Federblech (10) fest mit einem den Elastomerkörper (7) umringenden und fest mit der Außenhülse verbundenen Band (13) aus Metall verbunden ist.

9. Elastomerlager nach Anspruch 8, **dadurch gekennzeichnet, dass** das Band (13) zumindest bereichsweise von dem Kunststoff der Außenhülse (3) umgeben ist.

10. Elastomerlager nach einem der vorangehenden Ansprüche, **dadurch gekennzeichnet, dass** der Elastomerkörper (7) festhaftend mit der Außenhülse (3) verbunden ist.

11. Verbindungsanordnung mit einem Bauteil (15), welches wenigstens eine mit einer zumindest einseitig offenen Lageraufnahmeausnehmung (16) versehene Lageraufnahme (17) aufweist, und wenigstens einem Elastomerlager (1) nach einem der vorangehenden Ansprüche, welches in die Lageraufnahmeausnehmung (16) eingebracht ist, wobei die Lageraufnahme (17) eine die Lageraufnahmeausnehmung (16) begrenzende Lageraufnahmewandung (18) aufweist, in der eine oder mehrere Aussparungen (19) vorgesehen sind, in welche das Federblech (10) mit seinem Rastbereich (23) oder die Federbleche (10) mit ihren Rastbereichen (23) eingreifen.

12. Verbindungsanordnung nach Anspruch 11, **dadurch gekennzeichnet, dass** die Außenhülse (3) mit dem wenigstens einen Anschlag (5, 6) an einer Stirnseite (20) oder Schulter der Lageraufnahmewandung (18) axial abgestützt ist.
